# EUROPEAN PATENT SPECIFICATION

(11) **EP 3 728 483 B1**
(45) Date of publication and mention of the grant of the patent: **01.01.2025**
(21) Application number: 18803917.6
(22) Date of filing: 12.11.2018
(51) Int. Cl.: C09D 5/08, C09D 127/06, C09D 7/63

(54) **UNDERCOATING AND ARTICLES OF MANUFACTURE COATED THEREWITH**
GRUNDSCHICHT UND DAMIT BESCHICHTETE FERTIGUNGSARTIKEL
SOUS-COUCHE ET ARTICLES DE FABRICATION REVÊTUS DE CELLE-CI

(30) Priority: 22.12.2017 IN 201741046314
(43) Date of publication of application: 28.10.2020
(73) Proprietor: Henkel AG & Co. KGaA, 40589 Düsseldorf (DE)
(72) Inventor: GUPTA, Priya, Hinjewadi Maharashtra (IN); KUMAR, Girdhari, Pune 411027 (IN)
(86) International application number: PCT/EP2018/080870
(87) International publication number: WO 2019/120747

(56) References cited:
- EP-A2- 0 214 495
- CN-A- 107 815 041
- US-A1- 2004 034 143

## Description

### FIELD OF THE INVENTION

The present invention is broadly concerned with a novel protective coating for metals. More particularly, the present invention is concerned with an article of manufacture which is undercoated with a composition comprising a protective copolymer, a plasticizer and an adhesion promoter and which article of manufacture is adapted to be used on the bottom surfaces of vehicles such as cars, trucks and the like.

### BACKGROUND ART

It is well known in the art to apply protective coatings to prevent metal corrosion. In the field of vehicular manufacture and maintenance it is, for instance, common to apply a protective undercoating to: vehicular underbodies: floor-panels and the frames and sub-cross members associated therewith; trunk wells, wheel wells and other cavities; and, rocker panels. Such undercoating of these structural elements prevents the corrosion of the constituent metal by *inter alia* salt, oxygen and water and prevents the erosion and abrasion of that metal through the impingement of pebbles, stones and other particulate debris.

It is essential that the structural element possesses a strong bond between the metal and the undercoating so as to prevent the separation of the protective coating from the metal. It is also essential that the undercoating *per* se be strongly resistant to chemical reactions with salt, water and various chemicals to which it is subjected. It is also essential that the undercoating *per se* be highly resistant to the abrasive action and erosive action to which it is subjected. These requirements have prompted the development of a number of alternative undercoating solutions in the known art.

US Patent No. 4,282,131 (Trousil) discloses an undercoating composition comprising: an aqueous emulsion of a butadiene styrene copolymer; mica platelets; and, as an anti-foaming agent, ammonium hydroxide.

EP0546635 (Shell International Research) describes an underbody car coating composition comprising: a block copolymer containing a block of a monoalkenyl aromatic compound and a block of polyconjugated diene which has optionally been hydrogenated; a poly(monoalkenyl aromatic)block modifying resin; optionally a poly(conjugated diene) modifying resin; a plasticizer; a filler; and, a stabilizer and/or fire retarder.

EP0364738 (W. R. Grace and Co.) describes a two component (2K) polyol / polyisocyanate composition having utility as an abrasion resistant polyurethane automotive undercoating. The polyol component is either an unmodified castor oil or a castor oil modified with cyclohexanone-formaldehyde condensate. The modified castor oil may be further modified by adding the reaction product of neopentyl glycol and adipic acid. The polyisocyanate component comprises an MDI-based mixture containing polyisocyanate prepolymers based on alkylene oxides.

WO 2001096480 A2 (The Dow Chemical Company et al.) discloses a coating composition for a vehicular underbody, said composition comprising an emulsion or dispersion of asphalt in water and at least one filler selected from alkaline earth metal carbonates, alkaline metal carbonates and alkaline metal sulfates.

US 2004034143 A1 (Henkel Corporation) provides a PVC plastisol composition that interacts with an acid catalyzed topcoat applied thereon thereby resulting in the topcoat possessing a non-tacky surface over a wide range of temperatures.

It will be acknowledged that undercoatings of the type described above constitute one part of an overall paint or coating system. For example, known coating system of the aforementioned automotive parts can consist of an undercoating immobilized on the substrate surface, followed by primer, a base coat and a top coat. Due to the inherent wet-on-wet incompatibility of the uncured coating layers, each coating layer of the system typically has to be cured / baked in a separate stage or oven before the next layer of coating may be applied. As a consequence of this, original equipment manufacturers (OEM) are obliged to provide a paint shop having a multiplicity of ovens, each dedicated to the drying and curing of a particular coating layer. This renders such shops inefficient and costly, both energetically and economically.

The present inventors have recognized a need in the art to develop an undercoating composition which maintains a protective functionality when cured but which, when uncured, has excellent wet-on-wet compatibility with uncured coating layers of, for instance, primer, base coat and clear coat. The present inventors have recognized the need to enable the elimination of an oven heating step between the application of the undercoating and the coating layer directly deposited thereon.

### STATEMENT OF THE INVENTION

In accordance with a first aspect of the invention there is provided a method of forming a coated article, said method comprising:
i) applying an undercoating composition comprising:
   a) from 20 to 40 wt.-% of a vinyl chloride-vinyl acetate copolymer obtained by polymerization of a co-monomer mixture comprising, based on the total weight of the co-monomers, from 85 to 98 wt.% of vinyl chloride, from 2 to 10 wt.% of vinyl acetate and from 0 to 5 % by weight of a co-monomer selected from C₂ to C₈ olefins, vinylidene chloride and styrene;
   b) at least 2 wt.% of plasticizer selected from epoxidized natural oil; and,
   c) at least 2 wt.% of at least one aliphatic, cycloaliphatic or aromatic compound having a blocked isocyanate group, wherein said isocyanate group is blocked with a blocking agent capable of de-blocking at a temperature in the range of +/- 20°C compared to the de-blocking temperature of the corresponding isocyanate being blocked with nonylphenol,
   to at least one surface of said article;
ii) applying at least one further coating composition onto said undercoating composition; and
iii) curing said undercoating and said at least one further coating composition,
wherein the undercoating composition is in an uncured state upon application of the coating composition immediately contacting it.

The undercoating is characterized in that the copolymer a) - which may be referred to herein as the plastisol copolymer - is dispersed in the plasticizer component b). This copolymer a) may typically constitute from 20 to 40 wt.%, preferably from 20 to 35 wt.% of the undercoating composition. In preferred embodiments, the vinyl chloride-vinyl acetate copolymer a) is obtained by polymerization of a co-monomer mixture consisting of, based on the total weight of the co-monomers: from 90 to 98 wt.% of vinyl chloride; and from 2 to 10 wt.% of vinyl acetate. Independently or additionally, the vinyl chloride-vinyl acetate copolymer a) is preferably characterized by a number average molecular weight (Mn) of from 30000 to 50000 g/mol.

Epoxidized natural oil(s) constitute at least 2 wt.%, preferably from 2 to 10 wt.% and more preferably from 4 to 8 wt.% of the undercoating composition. Independently of these compositional ranges, the or each epoxidized natural oil of said plasticizer b) is - in preferred embodiments of the undercoating composition -characterized by an acid value of less than 1 mg KOH/g, preferably less than 0.95 mg KOH/g and more preferably less than 0.9 mg KOH/g. In particular, the plasticizer b) may comprise or consist of epoxidized soybean oil.

The undercoating compositions applied in the method of the present invention demonstrate good humidity resistance which enables the wet or uncured compositions to exhibit compatibility with the wet or uncured coating (layer) applied immediately upon it, even where such a coating (layer) is applied over the undercoating after an extended period of time. Moreover, the undercoating compositions demonstrate, upon application and upon curing, similar mechanical and physical properties compared to existing traditional systems.

The undercoated substrate formed in step a) can be stored for at least 1 hour and preferably at least 2 hours under ambient conditions before applying the immediately contacting coating composition thereon. In certain preferred embodiments of this method, step b) comprises applying a set of topcoating compositions onto said undercoating composition and said method is further characterized in that no curing of the applied undercoating and topcoating compositions is effected until all said coating compositions have been applied. The removal of the need to independently cure - by heating, for instance - each applied coating layer before application of the next, immediately contacting layer presents a significant saving in energy in the production of articles of manufacture and can also enhance productivity.

In accordance with a another aspect of the invention, there is provided an article of manufacture obtained by the method defined herein above.

### DEFINITIONS

As used herein, the singular forms "a", *"an"* and "the" include plural referents unless the context clearly dictates otherwise.

The terms "*comprising*", *"comprises"* and *"comprised* of" as used herein are synonymous with "*including*", *"includes",* "*containing*" or *"contains",* and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The expression of a weight percentage as *"wt.% of the composition"* is considered to be equivalent to and interchangeable with *"wt.%, based on the total weight of the composition".*

The words "*preferred*" and *"preferably"* are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The molecular weights given in the present text refer to number average molecular weights (Mn), unless otherwise stipulated. All molecular weight data refer to values obtained by gel permeation chromatography (GPC) calibrated against polystyrene standards in accordance with DIN 55672-1:2007-08 at 40°C, unless otherwise stipulated.

Viscosities of the compositions as described herein are determined using the Brookfield Viscometer, Model RVT at standard conditions of 20°C and 50% Relative Humidity (RH). The viscometer is calibrated using silicone oils of known viscosities, which vary from 1 Pa·s to 50 Pa·s. A set of RV spindles that attach to the viscometer are used for the calibration. Measurements of the composition are done using the No. 6 spindle at a speed of 20 revolutions per minute for 1 minute until the viscometer equilibrates. The viscosity corresponding to the equilibrium reading is then calculated using the calibration.

Where applicable, *"acid value"* is determined (mg KOH/g) by titration-based techniques as described in ASTM D664. In a typical procedure, a known amount of sample is dissolved in an organic solvent such as isopropanol and is titrated with a solution of potassium hydroxide with known concentration along with phenolphthalein as a color indicator.

The term *"de-blocking temperature"* is intended to mean that temperature at which a feature of de-blocking (e.g. detection of a free blocking group) can be observed. As the claims appended hereto recite a normative de-blocking temperature for (non-nonylphenol) blocking agents relative to the same isocyanate group blocked with nonylphenol, comparative de-blocking temperature measurements are made under identical conditions as far as is practicable. The *"de-blocking temperature"* as it applies to the blocked isocyanate compounds is determinable by thermogravimetric (TG) analysis performed on a Perkin-Elmer TGA 7 in nitrogen (N₂) atmosphere at a sample heating rate of 20°C/min.

*"Undercoat'* or "*undercoating*" as used herein refers to any coating, combination of coatings, or functionalized layer covering an entire substrate surface or a portion thereof under an additional coating. The term *"undercoating set*" as used herein refers to a set or group of one or more coatings under the top coating. This group or set of coatings can be applied together or separately covering an entire substrate surface or a portion thereof.

"*Topcoat*" or *"top coating*" as used herein refers to any coating, combination of coatings, or functionalized layer applied on top of one or more undercoatings or another top coating. A top coating may or may not be the final coating applied to a substrate surface. The term *"top coating set'* as used herein refers to a set or group of two or more coatings on top of one or more undercoatings.

As used herein, the terms *"applied on", "disposed on", "deposited on*/*over*", *"overlaid"* mean respectively applied, disposed, deposited and overlaid on but not necessarily in contact with the stated surface. For example, a coating layer "disposed on" a substrate does not preclude the presence of one or more other coating layers of the same or different composition located between the formed coating layer and the substrate.

A *"plasticizer"* for the purpose of the present invention refers to a compound that can be added to a host polymer, polymer blend, polymer composite or other resins to lower the glass transition temperature or melt temperature thereof and to decrease the viscosity thereof to facilitate processability.

The term *"natural oil"* as used herein denotes an oil comprising fatty acid triglycerides and which is derived from: a microbe, such as algae or bacteria; vegetables; seeds; and / or, nuts. The term is intended to encompass genetically-modified natural oil but to exclude petroleum-derived oil. Non-limiting examples of suitable natural oils include algae oil, beef tallow oil, canola oil, castor oil, corn oil, fish oil, linseed oil, palm oil, rapeseed oil, safflower oil, soybean oil, sunflower oil, tall oil, tung oil, and any combination thereof.

The term *"epoxidized natural oil"* as used herein, is a natural oil wherein at least one fatty acid moiety contains at least one epoxide group.

As used herein, the term *"catalytic amount'* means a sub-stoichiometric amount of catalyst relative to a reactant.

As used herein, *"ambient conditions"* refers to room temperature and humidity conditions or temperature and humidity conditions that are typically found in the area in which the coating composition is being applied to a substrate.

As used herein *"room temperature"* is intended to mean is 23°C plus or minus 2°C.

### DETAILED DESCRIPTION

### Copolymer a)

The undercoating composition applied in the method of the present invention includes a vinyl chloride-vinyl acetate copolymer obtained by polymerization of a co-monomer mixture comprising, based on the total weight of the co-monomers: from 85 to 98 wt.% of vinyl chloride; from 2 to 10 wt.% of vinyl acetate; and, 0 to 5 % by weight of a co-monomer selected from C₂ to C₈ olefins, vinylidene chloride and styrene. This copolymer - which may be referred to herein as the plastisol copolymer -constitutes from 20 to 40 wt.% and desirably from 20 to 35 wt.% of the undercoating composition.

In a preferred embodiment of the method the plastisol copolymer of the undercoating composition is characterized by being obtained by polymerization of a co-monomer mixture consisting of, based on the total weight of the co-monomers: from 90 to 98 wt.%, in particular from 95 to 98 wt.% of vinyl chloride; and from 2 to 10 wt.%, in particular from 2 to 5 wt.% of vinyl acetate. In a further embodiment, which is not intended to be mutually exclusive, the plastisol copolymer may be characterized by a number average molecular weight (Mn) of from 30000 to 50000 g/mol.

Polymerization methods for the synthesis of such copolymers are known in the art, for instance in US Patent No. 3,172,877 (Fishbein) and US Patent No. 7,915,364 (Assignee: Wacker Chemie AG). Moreover, suitable plastisol copolymers include known commercial products: in this regard KCH-12 (available from Hanwha) and Lacovyl PA 1384 (available from Arkema) may be mentioned.

### Plasticizer b)

The plasticizer b) of the coating composition is selected from of at least one epoxidized natural oil. This epoxidized natural oil constitutes at least 2 wt.%, preferably from 2 to 10 wt.% and more preferably from 4 to 8 wt.% of the undercoating composition.

In an embodiment, plasticizer b) selected from at least one epoxidized natural oil is selected from the group consisting of: epoxidized algae oil; epoxidized beef tallow oil; epoxidized canola oil; epoxidized avocado oil; epoxidized castor oil; epoxidized corn oil; epoxidized peanut oil; epoxidized fish oil; epoxidized linseed oil; epoxidized palm oil; epoxidized rapeseed oil; epoxidized hempseed oil; epoxidized safflower oil; epoxidized soybean oil; epoxidized sunflower oil; epoxidized tall oil; epoxidized tung oil; and, any combination thereof. More particularly, it is preferred that the plasticizer b) selected from at least one epoxidized natural oil is epoxidized soybean oil.

In a further embodiment of the method, which is not intended to be mutually exclusive, the plasticizer b) of the undercoating composition is selected from at least one epoxidized natural oil, wherein the or each epoxidized natural oil is characterized by an acid value of less than 1 mg KOH/g, preferably less than 0.95 mg KOH/g and more preferably less than 0.9 mg KOH/g.

The modification of natural oils, such as soybean oil, by epoxidation is established in the art. The attention of the skilled reader may, for example, be directed to: US 2016096916 (Webster et al.); Carlson, K. D., et al., J. Am. Oil Chem. Soc., 62: 934-939 (1985); and, Piazza, G. J., Some Recent Advances in Epoxide Synthesis in Recent Developments in the Synthesis of Fatty Acid Derivatives, AOCS Press, Champaign, 1999, pp. 182-195. Epoxidized oils may, in particular, be generated on an industrial scale using peracids, which are themselves generated by reacting formic or acetic acid with hydrogen peroxide in the presence of a strong acid catalyst (Gan, L. H., et al., J. Am. Oil Chem. Soc., 69: 347-351 (1992)). The enzymatic synthesis of *inter alia* epoxidised soybean oil is also known in the art, in which regard the attention of the skilled reader may be directed to US Patent No. 6,485,949 B1 (Piazza et al.). And still further epoxidation mechanisms are disclosed in: US Patent No. 5,318,808 (Crivello et al.); CN106947603 A (Foshan City Gaoming Shengjun Chemical Co. Ltd); CN106831654 A (Univ. Shaoyang); CN 106831655 A (Univ. Shaoyang). For completeness, it is not intended to limit the present application to any particular method of epoxidation of the natural oils or, in particular, of soybean oil, nor is it intended to limit the present application to any particular method of isolation, separation and / or purification of epoxidized natural oils from the product mixture obtained in their synthesis.

Commercial sources of epoxidized soybean oil include but are not limited to: ESBO (CAS 8013-07-8) available from Lanxess; Vikoflex^{®} 7170, available from Arkema; and, Jenkinol^{®} 680 available from Acme-Hardesty (Pennsylvania, US).

### Adhesion Promoter c)

The undercoating composition comprises c) at least one aliphatic, cycloaliphatic or aromatic compound having a blocked isocyanate group, wherein said isocyanate group is blocked with a blocking agent capable of de-blocking at a temperature in the range of +/- 20°C compared to the de-blocking temperature of the corresponding isocyanate being blocked with nonylphenol. Blocking agents meeting this criterion but also having de-blocking temperatures of less than 145°C, less than 140°C or less than 135°C are important.

Said at least one aliphatic, cycloaliphatic or aromatic compound having a blocked isocyanate group (component c)) constitutes at least 2 wt.%, preferably from 2 to 10 wt.% and more preferably from 4 to 8 wt.% of the coating composition.

The blocked isocyanate compound may be prepared by standard procedures well known to a person skilled in the art: a polyisocyanate and a blocking agent are typically mixed together and heated to promote the reaction thereof. Commonly, the reaction temperature will be within the range from 10°C to 100° C, for example from 30°C to 60°C. A catalyst to promote blocking may also be used.

Suitable reactant polyisocyanates should possess at least two isocyanate groups. As exemplary reactant polyisocyanates might therefore be mentioned: toluene 2,4-diisocyanate; toluene 2,6-diisocyanate; diphenylmethane 2,4'- and / or 4,4'-diisocyanate; hexamethylene 1,6-diisocyanate; m-xylylene diisocyanate; p-xylylene diisocyanate; tetramethylene diisocyanate; 1-isocyanato-3,3,5-trimethyl-5-isocyanato-methylcyclohexane (or isophorone diisocyanate, IPDI); tetramethylxylylene diisocyanate; propylene 1,2-diisocyanate; 2,2,4-trimethylene diisocyanate; tetramethylene diisocyanate; butylene 2,3-diisocyanate; dodecane 1,12-diisocyanate; cyclohexane 1,3- and 1,3-diisocyanate; perhydro-2,4' and / or 4,4'-diphenylmethane diisocyanate; phenylene 1,3- and 1,4-diisocyanate; 3,2'- and / or 3,4'-diisocyanato-4-methyldiphenylmethane; naphthalene 1,5-diisocyanate; triphenylmethane 4,4'-triisocyanate; and, mixtures of said compounds while toluene-diisocyanates are specially preferred reactant polyisocyanates.

In addition to said simple isocyanates, those compounds that contain heteroatoms in the group linking the isocyanate groups are also suitable for preparing the blocked isocyanate compounds c). Examples thereof are polyisocyanates having carbodiimide groups, allophanate groups, isocyanurate groups, urethane groups, acylated urea groups and biuret groups.

Suitable polyisocyanates are, moreover, the known pre-polymers having terminal isocyanate groups of the genus that are accessible by the reaction of the above-mentioned simple polyisocyanates - and in particular diisocyanates - with sub-stoichiometric quantities of organic compounds with at least two groups that are reactive towards isocyanate groups. As said organic compounds, particular mention may be made of oligomeric or polymeric polyhydric alcohols having a number average molecular weight (Mn) of from 300 to 10000 g/mol or from 400 to 6000 g/mol and which are selected from the group consisting of: polyether polyols; polyester polyols; polyesteramide polyols; polycarbonate polyols; polybutadiene polyols; polyurethane polyols; polyacrylate polyols; and, combinations thereof.

For completeness, procedures for forming isocyanate-terminated pre-polymers are established in the art: the skilled reader may, for reference, be directed to: US Patent No. 4,294,951; US Patent No. 4,555,562; US Patent No. 4,182,825; and, WO2004/074343.

Examples of blocking agents that may be used, either individually or in combination, include but are not limited to: phenols, such as phenol, nonylphenol or cresol; oximes, such as butanone oxime and cyclohexanone oxime; lactams, such as s-caprolactam; secondary amines, such as diisopropyl-amine; pyrazoles, such as dimethylpyrazole; imidazoles; and, triazoles. A preference for nonylphenol, 3,5 dimethylpyrazole and N-t-butylbenzyl amine might be mentioned in this regard, while nonylphenol is especially preferred.

The blocking agent is reacted with the polyisocyanate in an amount such that the equivalents of the blocking groups of the blocking agent correspond to at least 60 mol.%, preferably 75 mol.%, more preferably 85 mol.% and most preferably more than 95 mol.% of the amount of isocyanate groups to be blocked. Often a small excess of blocking agent can be advantageous in order to ensure complete reaction of all isocyanate groups but said excess should not be more than 20 mol.%. In any event, the blocked isocyanate chemical structure may be confirmed by Proton Nuclear Magnetic Resonance (¹H-NMR) and /or Fourier Transform Infrared spectroscopy (FTIR).

It is noted that component c) of the undercoating composition may comprise or consist of an aliphatic, cycloaliphatic or aromatic compound having a blocked isocyanate group and at least one other different functional group selected from: (meth)acryloyl; vinyl; allyl; maleinimido; trialkoxysilyl; and haloalkyl. As examples thereof may be mentioned: blocked trialkoxysilylpropyl isocyanates, such as triethoxysilylpropyl isocyanate or trimethoxysilylpropyl isocyanate blocked with 3,5-dimethylpyrazole; blocked isocyanatoalkyl(meth)acrylates, such as isocyanatoethyl(meth)acrylate en blocked with 3,5-dimethylpyrazole; and, Isocyanatoethyl(meth)acrylate blocked with butanone oxime, available from Showa Denko K. K. as KarenzMOI-BM.

Further exemplary commercial products, for use in or as component c) of the coating composition, include Nourybond 289 and Nourybond 290 available from Air Products and Chemicals.

### Additives and Adjuvants

The undercoating composition applied in the method of the present invention will typically further comprise adjuvants and additives that can impart improved properties to these compositions. Included among such adjuvants and additives are: catalysts; hardeners; solvents; stabilizers; anti-blistering agents; fillers; wetting agents; drying agents or moisture scavengers; flame retardants; rheological adjuvants; corrosion inhibitors; color pigments; and, pigment dispersants. The undercoating composition may comprise up to 70 wt.%, based on the weight of the composition, of said additives and adjuvants *in toto.*

The undercoating compositions applied in the method of the present invention do not require catalysts. In certain embodiments, however, it may be advantageous to enable to enhance the deblocking of component c) through the use of known catalysts. Such catalysts may comprise Lewis bases, Lewis acids and / or insertion catalysts, as described in Ullmann's Encyclopedia of Industrial Chemistry, 5th Edition, 1992, Volume A21, pp. 673 to 674. For example, suitable catalysts include tin octylate, dibutyltin diacetate, dibutyltin dilaurate, dibutyltin mercaptide, dibutyltin dimaleate, dimethyltin diacetate, dimethyltin dilaurate, dimethyltin mercaptide, dimethyltin dimaleate, triphenyltin acetate, triphenyltin hydroxide, 1,4 diazabicyclo[2.2.2]octane, and/or triethylamine. Triorganotin materials, such as those disclosed in US Patent No. 5,902,871 and US Patent No. 5,880,178 might also find utility here.

Without intention to limit the catalytic amount of any given catalyst, the undercoating composition should conventionally comprise, by weight, up to 5000 ppm, for example from 50 to 500 ppm, of catalyst, based on the weight of the composition.

The undercoating composition applied in the method of the present invention may optionally comprise a compound having an active hydrogen atom which may function as a curing agent or hardener for the unblocked polyisocyanate. Upon heating to the de-blocking temperature, the reaction of the unblocked -NCO groups with the reactive functional groups of hardener promotes polyurethane formation and -without being bound by theory - an interpenetrating polymer network with the plastisol co-polymer a). For illustrative purposes, the use of amine derivatives and polyaminoamide derivatives as hardening agents is disclosed in *inter alia:* EP-A-214495; and, US Patent No. 5,130,402.

Solvents are an optional component of the undercoating composition which may be included to moderate the viscosity of the composition and thereby its mode of application. Suitable solvents will typically be paraffinic, naphthenic and aromatic hydrocarbons having a boiling point of from 150 to 250°C. And the amount of the solvent should be from 0 to 50 wt.%, preferably from 5-40 wt.%, based on the weight of the plastisol copolymer a).

*"Stabilizers"* for purposes of this invention are to be understood as including antioxidants, UV stabilizers and hydrolysis stabilizers. Typically herein stabilizers may constitute *in toto* up to 10 wt.% or up to 5 wt.%, based on the total weight of the composition. Standard commercial examples of stabilizers suitable for use herein include sterically hindered phenols and/or thioethers and/or substituted benzotriazoles and/or amines of the hindered amine light stabilizer (HALS) type. It is preferred in the context of the present invention that a UV stabilizer that carries a silyl group - and becomes incorporated into the end product upon drying - be used: the products Lowilite^{™} 75, Lowilite^{™} 77 (Great Lakes, USA) are particularly suitable for this purpose. Benzotriazoles, benzophenones, benzoates, cyanoacrylates, acrylates, sterically hindered phenols, phosphorus and / or sulfur can also be added.

As noted, the curable undercoating compositions applied in the method according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicic acids advantageously have a Brunauer-Emmett-Teller (BET) surface area from 10 to 90 m²/g. When they are used, they do not cause any additional increase in the viscosity of the composition applied in the method according to the present invention, but do contribute to strengthening the cured composition.

It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the undercoating compositions applied in the method of the present invention will preferably be from 1 to 50 wt.%, and more preferably from 5 to 40 wt.%, based on the total weight of the composition. The total amount of filler will typically be determinative of the desired viscosity of the composition upon application.

Examples of suitable pigments are titanium dioxide, iron oxides, or carbon black.

### Illustrative Embodiments of the Present Invention

Without intention to limit the present invention, an undercoating composition applied in the method according to the present invention which has yielded good results is characterized by comprising, based on the weight the composition:
a) from 20 to 40 wt.%, preferably from 20 to 35 wt.% and more preferably from 25 to 35 wt.% of a vinyl chloride-vinyl acetate copolymer obtained by polymerization of a co-monomer mixture consisting of, based on the total weight of the co-monomers, from 95 to 98 wt.% of vinyl chloride and from 2 to 5 wt.% of vinyl acetate;
b) from 5 to 7 wt.% of epoxidized soybean oil; and,
c) from 5 to 7 wt.% of said at least one aliphatic, cycloaliphatic or aromatic compound having a blocked isocyanate group, wherein said isocyanate group is blocked with a blocking agent capable of de-blocking at a temperature in the range of +/- 20°C compared to the de-blocking temperature of the corresponding isocyanate being blocked with nonylphenol.

### Methods and Applications

The compositions applied in a method of the present invention may be produced using mixing equipment - such as planetary mixers, planetary dissolvers, kneaders and internal mixers - or extrusion equipment, such as twin-screw extruders, which will be familiar to those of ordinary skill in the art. The shear forces and / or duration of the mixing must be sufficient to ensure a homogenous mixture in which the copolymer a) is suspended in the plasticizer component b).

The so-mixed coating composition may then be applied to a substrate surface by conventional application methods such as flooding, dipping, brushing, roll coating, doctor-blade application, printing methods, air-atomized spray, electrostatic rotary atomizers, air-assisted spray, airless spray, high-volume low-pressure spray, air-assisted airless spray and high-speed rotation bell. The substrate surface may have been pre-treated prior to the application of the undercoating composition to remove extractives or, more particularly, to improve the wettability of the surface.

The viscosity of the undercoating composition may be from 1 to 150 Pa·s, preferably 10 to 50 Pa·s, as measured using a Brookfield viscometer at 20°C. As would be recognized by a skilled practitioner, the viscosities which are appropriate for different application methods vary considerably. In any event, the composition should generally be applied to the substrate surface(s) in an amount of from 1 to 50 g/m², preferably from 5 to 30 g/m², more preferably from 10 to 25 g/m².

The undercoating composition as disposed upon the substrate surface may be applied as a homogeneous layer. In an alternative embodiment, the applied layer may exhibit a graded progression by which is meant that the percentage by volume of a constituent of the composition changes through the thickness of the applied layer.

As mentioned above, the use of the coating composition applied in the method according to the present invention obviates the need to pass the coated substrate through an oven or heating press before further coating layer(s) are disposed thereon. This does not preclude the coated substrate from being subjected to irradiation or to streams of hot air or other gases to elevate the temperature of the undercoating and moderate its rate of drying but without elevating the temperature of the undercoating to the de-blocking temperature of the blocked polyisocyanate compound(s). It is, however, preferred that no heating means of any kind is applied to the coating. Under such circumstances, the wetted substrate can retain its compatibility with topcoats disposed thereon conditions for at least 60 minutes, for example at least 120 minutes, even for 72 hours or 96 hours under ambient conditions.

The coating layer, for instance the primer layer, which may be disposed directly over the uncured or wet undercoating composition applied in the method according to the present invention can similarly be applied by any conventional methods known in the art, including by electrodeposition techniques, such as cataphoresis or galvanization. These methods, and equally the conventional methods for applying the subsequent topcoat or topcoat sets - to form the finalized article of manufacture - need not be elucidated further. However, during the application of the overall paint or coating system, the temperature of the undercoating is required to be raised above the de-blocking temperature in order to cure that coating composition.

As noted above, the novel compositions applied in the method of the present invention are designed primarily for the automotive industry as an undercoating for steel frames, rocker panels, wheel wells and the like. However, it is considered that the compositions may also provide a useful undercoating for other ferrous substrates which are exposed to salt and marine environments: such substrates may include steel structures for highways and bridges that are exposed to road salt, as well as the interior and exterior steel surfaces on ships and other structures on or near oceans or inland salt lakes. And the composition may find further utility as an undercoating for further ferrous substrates that require corrosion resistance and resistance to the impact of debris, including but limited to component structures of buses, ships and farm equipment and also rail equipment, such as locomotives, coaches, freight cars, street cars and subway cars.

Moreover, there is no intention to limit the composition to ferrous substrates: nonferrous articles - constructed of Al, Cu or Mg for instance - and wood, fabrics, concrete, plastics, rubber, glass, ceramics, woven and non-woven fibers and paper may also be coated with the composition.

Various features and embodiments of the disclosure are described in the following examples, which are intended to be representative and not limiting.

### EXAMPLES

The following commercial products are used in the Examples:

| | |
|---|---|
| Exxsol D80: | De-aromatized solvent available from Exxon Mobil. |
| Ibero Tec 3017: | Adhesion Promoter, available from Ibero Chemie. |
| Ibero Tec 3157: | Adhesion Promoter, available from Ibero Chemie. |
| Desmodur BL 3175: | Blocked, aliphatic polyisocyanate based on HDI, available from Covestro. |
| Vestolit P 1353 K: | PVC Resin available from VESTOLIT GmbH. |
| PCH-72: | PVC Copolymer Resin available from Kaneka |
| PBM-6: | PVC Copolymer Resin available from Kaneka. |
| ESO: | Epoxidized Soybean Oil (CAS 8013-07-8) available from Lanxess. |
| EH 4358S: | Hardener available from Adeka Ltd. |
| Nourybond 379: | Blocked, aliphatic polyisocyanate available from Air Products and Chemicals. |
| Lacovyl PA 1384: | Vinyl chloride, vinyl acetate (4%) copolymer available from Arkema. |

The compositions defined in Table 1 below were formulated in accordance with the following protocol. 10wt.% of the phthalate ester plasticizer was charged into a mixing vessel together with all further components of the compositions, save for the solvent, epoxidized soybean oil (where applicable) and the polyvinyl chloride resins. The mixture was subjected to a preliminary mixing step comprising 5 minutes at low speed and 20 minutes at high speed under vacuum. The solvent and 50 wt.% of the polyvinyl chloride resin(s) were then charged into the mixing vessel and the mixing step repeated. A further 10 wt.% of the phthalate ester plasticizer and the remaining 50 wt.% of the polyvinyl chloride resin(s) were then charged into the mixing vessel and the mixing step again repeated. Finally, the remainder of the plasticizer, including the epoxidized soybean oil where applicable, was charged into the mixing vessel under stirring.

**Table 1**

| **Raw Material** | **Function** | **Comparative Example 1** | **Comparative Example 2** | **Example 1** |
|---|---|---|---|---|
| Vestolit P 1353 K | PVC Resin | 13 | 4.32 | - |
| PCH-72 | Copolymer Resin | 8 | 34.52 | 5 |
| PBM-6 | Copolymer Resin | 6 | - | - |
| Lacovyl PA 1384 | Plastisol Copolymer | - | - | 24.4 |
| Diisononyl phthalate | Plasticizer | 31.8 | 30.87 | 19.27 |
| ESO | Plasticizer | | - | 5.5 |
| Exxsol D80 | Solvent | 6 | 6 | 5 |
| Ibero-Tec 3017 | Adhesion Promoter | - | 0.89 | - |
| Ibero-Tec 3157 | Adhesion Promoter | 0.8 | 0.51 | - |
| Desmodur BL 3175 | Adhesion Promoter | 0.6 | 0.93 | - |
| Nourybond 289 | Adhesion Promoter | - | - | 6.8 |
| EH 4358S | Hardener | - | - | 0.7 |
| Titanium dioxide | Pigment | 2 | 2 | |
| Carbon black paste | Pigment | 0.02 | 0.02 | 0.02 |
| Calcium Carbonate & Silica | Filler | 30.4 | 18.51 | 30.66 |
| Zinc & Calcium Oxide | Adjuvants | 1.3 | 1.43 | 2.49 |

### Testing Methods

The compositions as defined in Table 1 were subjected to the following tests, the results of which are provided in Table 2 herein below:
The Standard Gravity of the compositions was measured in accordance with ASTM D891 - 09.

Sag Resistance was measured using a multinotch applicator in accordance with ASTM D4400 - 99(2012)e1.

Adhesion may be measured in accordance with ASTM D 3359-93 (Standard Test Method for Measuring Adhesion by Tape Test Method B).

Chipping-resistance was evaluated using a Nut Drop Test according to the following protocol. A coating layer having a dry thickness of 100 µm was applied to a planar ferrous test panel having the dimensions board size 70×150×0.8 mm. The test panel was mounted horizontally in a frame and steel nuts (of approximately 2 cm in length) were dropped in 3 Kg units from a fixed locus into the centre of the panel. The total fall weight of nuts was recorded at the point when abnormalities such as cracks and fractures occurred in the substrate.

Wet-on-Wet Paintability Test Protocols:
i) The undercoating composition is applied to a planar ferrous test panel at a thickness of 100 microns and the coated panel allowed to stand for 10 minutes at room temperature and ambient humidity. A primer (OP-880 ZOC (L-70) from Berger Nippon) is then applied at a coating thickness of 20 microns, followed after a 5 minutes flash-off time by a base coat (SP M-700 SM ZHJ C/B from Berger Nippon) at a coating thickness of 12 microns. A further base coat (SP M-700 SM ZHJ P/B from Berger Nippon) was then applied at a coating thickness of 8 microns. After a flash-off time of 8 minutes a clear coat (SPO-100 clear SG (KAI 3) from Berger Nippon) was applied at a coating thickness of 20 microns. After a flash-off time of 10 minutes, the panel was transferred to an oven set at 140°C for 30 minutes. The panel was removed and observed for dewetting / sagging of the paint.
ii) The undercoating composition is applied to a planar ferrous test panel at a thickness of 100 microns and the coated panel allowed to stand for 72 hours at 30°C and 80% relative humidity. A primer (OP-880 ZOC (L-70) from Berger Nippon) is then applied at a coating thickness of 20 microns, followed after a 5 minutes flash-off time by a base coat (SP M-700 SM ZHJ C/B from Berger Nippon) at a coating thickness of 12 microns. A further base coat (SP M-700 SM ZHJ P/B from Berger Nippon) was then applied at a coating thickness of 8 microns. After a flash-off time of 8 minutes a clear coat (SPO-100 clear SG (KAI 3) from Berger Nippon) was applied at a coating thickness of 20 microns. After a flash-off time of 10 minutes, the panel was transferred to an oven set at 140°C for 30 minutes. The panel was removed and observed for dewetting / sagging of the paint.
iii) The undercoating composition is applied to a planar ferrous test panel at a thickness of 100 microns and the coated panel allowed to stand for 96 hours at 30°C and 80% relative humidity. A primer (OP-880 ZOC (L-70) from Berger Nippon) is then applied at a coating thickness of 20 microns, followed after a 5 minutes flash-off time by a base coat (SP M-700 SM ZHJ C/B from Berger Nippon) at a coating thickness of 12 microns. A further base coat (SP M-700 SM ZHJ P/B from Berger Nippon) was then applied at a coating thickness of 8 microns. After a flash-off time of 8 minutes a clear coat (SPO-100 clear SG (KAI 3) from Berger Nippon) was applied at a coating thickness of 20 microns. After a flash-off time of 10 minutes, the panel was transferred to an oven set at 140°C for 30 minutes. The panel was removed and observed for dewetting / sagging of the paint.
iv) The undercoating composition is applied to a planar ferrous test panel at a thickness of 100 microns and the coated panel allowed to stand for 192 hours at 30°C and 80% relative humidity. A primer (OP-880 ZOC (L-70) from Berger Nippon) is then applied at a coating thickness of 20 microns, followed after a 5 minutes flash-off time by a base coat (SP M-700 SM ZHJ C/B from Berger Nippon) at a coating thickness of 12 microns. A further base coat (SP M-700 SM ZHJ P/B from Berger Nippon) was then applied at a coating thickness of 8 microns. After a flash-off time of 8 minutes a clear coat (SPO-100 clear SG (KAI 3) from Berger Nippon) was applied at a coating thickness of 20 microns. After a flash-off time of 10 minutes, the panel was transferred to an oven set at 140°C for 30 minutes. The panel was removed and observed for dewetting / sagging of the paint.

**Table 2**

| **Properties** | **Comparative Example 1** | **Comparative Example 2** | **Example 1** |
|---|---|---|---|
| Appearance | Passes | Passes | Passes |
| Solids Content (%) | 95.2 | 95.3 | 96.2 |
| Specific Gravity | 1.36 | 1.25 | 1.34 |
| Viscosity at 20°C (Pa·s) | 28 | 17 | 19 |
| Sagging Resistance (mm) | 3 | 3 | 3 |
| Adhesion (Room Temperature) | No peel off, 100/100 | No peel off, 100/100 | No peel off, 100/100 |
| Adhesion (After Storage for 72 hours at 30°C, 50% Relative Humidity) | No peel off, 100/100 | No peel off, 100/100 | No peel off, 100/100 |
| Nut Drop Test (Immediate) | 21 | 36 | 45 |
| Nut Drop Test (After Storage for 72 hours at 30°C, 50% Relative Humidity) | 18 | 33 | 42 |

| **Wet-on-Wet Paintability Tests** | | | |
|---|---|---|---|
| Immediate (i) | Not OK: Paint Dripping | Not OK: Paint Dripping | Appearance OK: no dripping |
| After 72 hours at 30°C and 80% relative humidity (ii) | Not OK: Paint Dripping | Not OK: Paint Dripping | Appearance OK: no dripping |
| After 96 hours at 30°C and 80% relative humidity (iii) | Not OK: Paint Dripping | Not OK: Paint Dripping | Appearance OK: no dripping |

## Claims

1. A method of forming a coated article, said method comprising:
i) applying the undercoating composition comprising:
a) from 20 to 40 wt.% of a vinyl chloride-vinyl acetate copolymer obtained by polymerization of a co-monomer mixture comprising, based on the total weight of the co-monomers, from 85 to 98 wt.% of vinyl chloride, from 2 to 10 wt.% of vinyl acetate and from 0 to 5 % by weight of a co-monomer selected from C₂ to C₈ olefins, vinylidene chloride and styrene;
b) at least 2 wt.% of plasticizer selected from epoxidized natural oil(s); and,
c) at least 2 wt.% of at least one aliphatic, cycloaliphatic or aromatic compound having a blocked isocyanate group, wherein said isocyanate group is blocked with a blocking agent capable of de-blocking at a temperature in the range of +/- 20°C compared to the de-blocking temperature of the corresponding isocyanate being blocked with nonylphenol.
to at least one surface of said article;
ii) applying at least one further coating composition onto said undercoating composition; and
iii) curing said undercoating and said at least one further coating composition,
wherein the undercoating composition is in an uncured state upon application of the coating composition immediately contacting it.

2. The method according to claim 1, wherein said vinyl chloride-vinyl acetate copolymer a) is obtained by polymerization of a co-monomer mixture consisting of, based on the total weight of the co-monomers: from 90 to 98 wt.% of vinyl chloride; and from 2 to 10 wt.% of vinyl acetate.

3. The method according to claim 1 or claim 2, wherein said vinyl chloride-vinyl acetate copolymer a) is **characterized by** a number average molecular weight (Mn) of from 30000 to 50000 g/mol.

4. The method according to any one of claims 1 to 3, wherein said vinyl chloride-vinyl acetate copolymer a) constitutes from 20 to 35 wt.% of the undercoating composition.

5. The method according to any one of claims 1 to 4, wherein the or each epoxidized natural oil of said plasticizer b) is **characterized by** an acid value of less than 1 mg KOH/g, preferably less than 0.95 mg KOH/g and more preferably less than 0.9 mg KOH/g.

6. The method according to any one of claims 1 to 5, wherein said plasticizer b) comprises or consists of epoxidized soybean oil.

7. The method according to any one of claims 1 to 6, wherein said epoxidized natural oil(s) constitutes from 2 to 10 wt.% and more preferably from 4 to 8 wt.% of the undercoating composition.

8. The method according to any one of claims 1 to 7, wherein at least one aliphatic, cycloaliphatic or aromatic compound having a blocked isocyanate group c) constitutes from 2 to 10 wt.% and more preferably from 4 to 8 wt.% of the undercoating composition.

9. The method according to claim 1 comprising, based on the weight the composition:
a) from 20 to 40 wt.%, preferably from 20 to 35 wt.% and more preferably from 25 to 35 wt.% of a vinyl chloride-vinyl acetate copolymer obtained by polymerization of a co-monomer mixture consisting of, based on the total weight of the co-monomers, from 95 to 98 wt.% of vinyl chloride and from 2 to 5 wt.% of vinyl acetate;
b) from 5 to 7 wt.% of epoxidized soybean oil; and,
c) from 5 to 7 wt.% of said at least one aliphatic, cycloaliphatic or aromatic compound having a blocked isocyanate group.

10. The method according to any one of the claims 1 to 9, wherein said undercoated substrate formed in step i) is stored for at least 1 hour and preferably at least 2 hours before applying the immediately contacting coating composition thereon.

11. The method according to any one of the claims 1 to 10, wherein step b) comprises applying a set of topcoating compositions onto said undercoating composition and further wherein no curing of the applied undercoating and topcoating compositions is effected until all said coating compositions have been applied.

12. An article of manufacture obtained by the method defined in any one of claims 1 to 11.

## Patentansprüche

1. Verfahren zum Ausbilden eines beschichteten Erzeugnisses, das Verfahren umfassend:
i) Aufbringen der Grundierungszusammensetzung, umfassend:
a) von zu 20 bis 40 Gew.-% ein Vinylchlorid-Vinylacetat-Copolymer, das durch Polymerisation eines Comonomergemisches erhalten wird, umfassend, basierend auf dem Gesamtgewicht der Comonomere, von zu 85 bis 98 Gew.-% Vinylchlorid, von zu 2 bis 10 Gew.-% Vinylacetat und von zu 0 bis 5 Gew.-% ein Comonomer, das aus C₂ bis C₈ Olefine, Vinylidenchlorid und Styrol ausgewählt ist;
b) mindestens zu 2 Gew.-% Weichmacher, der aus epoxidiertem/n natürlichem/n Öl(en) ausgewählt ist; und,
c) mindestens zu 2 Gew.-% mindestens eine aliphatische, cycloaliphatische oder aromatische Verbindung, die eine blockierte Isocyanatgruppe aufweist, wobei die Isocyanatgruppe mit einem Blockiermittel blockiert ist, das in der Lage ist, bei einer Temperatur in dem Bereich von +/- 20 °C zu entblockerien, im Vergleich zu der Entblockierungstemperatur des entsprechenden Isocyanats, das mit Nonylphenol blockiert ist.
an mindestens einer Oberfläche des Erzeugnisses;
ii) Aufbringen von mindestens einer weiteren Beschichtungszusammensetzung auf die Grundierungszusammensetzung; und
iii) Aushärten der Grundierungszusammensetzung und der mindestens einen weiteren Beschichtungszusammensetzung, wobei die Grundierungszusammensetzung bei einer Aufbringung der Beschichtungszusammensetzung in unmittelbarem Kontakt mit ihr in einem ungehärteten Zustand ist.

2. Verfahren nach Anspruch 1, wobei das Vinylchlorid-Vinylacetat-Copolymer a) durch Polymerisation eines Comonomergemisches erhalten wird, bestehend, basierend auf dem Gesamtgewicht der Comonomere, aus: von zu 90 bis 98 Gew.-% Vinylchlorid; und von zu 2 bis 10 Gew. % Vinylacetat.

3. Verfahren nach Anspruch 1 oder 2, wobei das Vinylchlorid-Vinylacetat-Copolymer a) **gekennzeichnet ist durch** ein zahlenmittleres Molekulargewicht (Mn) von 30000 bis 50000 g/mol.

4. Verfahren nach einem der Ansprüche 1 bis 3, wobei das Vinylchlorid-Vinylacetat-Copolymer a) von zu 20 bis 35 Gew.-% der Grundierungszusammensetzung ausmacht.

5. Verfahren nach einem der Ansprüche 1 bis 4, wobei das oder jedes epoxidierte natürliche Öl des Weichmachers b) **gekennzeichnet ist durch** eine Säurezahl von weniger als 1 mg KOH/g, bevorzugt weniger als 0,95 mg KOH/g und stärker bevorzugt weniger als 0,9 mg KOH/g.

6. Verfahren nach einem der Ansprüche 1 bis 5, wobei der Weichmacher b) epoxidiertes Sojaöl umfasst oder daraus besteht.

7. Verfahren nach einem der Ansprüche 1 bis 6, wobei das/die epoxidierte(n) natürliche(n) Öl(e) von zu 2 bis 10 Gew.-% und stärker bevorzugt von zu 4 bis 8 Gew.-% der Grundierungszusammensetzung ausmachen.

8. Verfahren nach einem der Ansprüche 1 bis 7, wobei mindestens eine aliphatische, cycloaliphatische oder aromatische Verbindung, die eine blockierte Isocyanatgruppe aufweist, c) von zu 2 bis 10 Gew.-% und stärker bevorzugt von zu 4 bis 8 Gew.-% der Grundierungszusammensetzung ausmacht.

9. Verfahren nach Anspruch 1, umfassend, basierend auf dem Gewicht der Zusammensetzung:
a) von zu 20 bis 40 Gew.-%, vorzugsweise von zu 20 bis 35 Gew.-% und stärker bevorzugt von zu 25 bis 35 Gew.-% ein Vinylchlorid-Vinylacetat-Copolymer, das durch Polymerisation eines Comonomergemisches erhalten wird, das, basierend auf dem Gesamtgewicht der Comonomere, aus von zu 95 bis 98 Gew.-% Vinylchlorid und von zu 2 bis 5 Gew.-% besteht;
b) von zu 5 bis 7 Gew. % epoxidiertes Sojaöl; und,
c) von zu 5 bis 7 Gew.-% die mindestens eine aliphatische, cycloaliphatische oder aromatische Verbindung, die eine blockierte Isocyanatgruppe aufweist.

10. Verfahren nach einem der Ansprüche 1 bis 9, wobei das grundierte Substrat, das in Schritt i) ausgebildet wird, mindestens 1 Stunde und vorzugsweise mindestens 2 Stunden gelagert wird, bevor die unmittelbar kontaktierende Beschichtungszusammensetzung darauf aufgetragen wird.

11. Verfahren nach einem der Ansprüche 1 bis 10, wobei Schritt b) das Aufbringen eines Satzes von Deckbeschichtungszusammensetzungen auf die Grundierungszusammensetzung umfasst und ferner wobei kein Aushärten der aufgebrachten Grundierungs- und Deckbeschichtungszusammensetzungen erfolgt, bis alle der Beschichtungszusammensetzungen aufgebracht worden sind.

12. Herstellungserzeugnis, das durch ein Verfahren erhalten wird, das nach einem der Ansprüche 1 bis 11 definiert ist.

## Revendications

1. Procédé de formation d'un article revêtu, ledit procédé comprenant :
i) l'application de la composition de sous-couche comprenant :
a) de 20 à 40 % en poids d'un copolymère de chlorure de vinyle-acétate de vinyle obtenu par polymérisation d'un mélange de co-monomères comprenant, sur la base du poids total des co-monomères, de 85 à 98 % en poids de chlorure de vinyle, de 2 à 10 % en poids d'acétate de vinyle et de 0 à 5 % en poids d'un co-monomère choisi parmi les oléfines en C₂ à C₈, le chlorure de vinylidène et le styrène ;
b) au moins 2 % en poids de plastifiant choisi parmi l'huile ou les huiles naturelles époxydées ; et,
c) au moins 2 % en poids d'au moins un composé aliphatique, cycloaliphatique ou aromatique ayant un groupe isocyanate bloqué, dans lequel ledit groupe isocyanate est bloqué par un agent de blocage capable de se débloquer à une température dans la plage de +/- 20 °C par rapport à la température de déblocage de l'isocyanate correspondant bloqué par le nonylphénol.
sur au moins une surface dudit article ;
ii) l'application au moins d'une autre composition de revêtement sur ladite composition de sous-couche ; et
iii) durcir ladite sous-couche et ladite au moins une autre composition de revêtement, dans lequel la composition de sous-couche est dans un état non durci lors de l'application de la composition de revêtement qui est immédiatement en contact avec elle.

2. Procédé selon la revendication 1, dans lequel ledit copolymère chlorure de vinyle-acétate de vinyle a) est obtenu par polymérisation d'un mélange de co-monomères constitué, sur la base du poids total des co-monomères : de 90 à 98 % en poids de chlorure de vinyle ; et de 2 à 10 % en poids d'acétate de vinyle.

3. Procédé selon la revendication 1 ou la revendication 2, dans lequel ledit copolymère de chlorure de vinyle-acétate de vinyle a) est **caractérisé par** un poids moléculaire moyen (Mn) en nombre de 30 000 à 50 000 g/mol.

4. Procédé selon l'une quelconque des revendications 1 à 3, dans lequel ledit copolymère de chlorure de vinyle-acétate de vinyle a) représente de 20 à 35 % en poids de la composition de sous-couche.

5. Procédé selon l'une quelconque des revendications 1 à 4, dans lequel l'huile naturelle époxydée ou chaque huile époxydée dudit plastifiant b) est **caractérisée par** un indice d'acidité inférieur à 1 mg KOH/g, de préférence inférieur à 0,95 mg KOH/g et plus préférablement inférieur à 0,9 mg KOH/g.

6. Procédé selon l'une quelconque des revendications 1 à 5, dans lequel ledit plastifiant b) comprend ou est constitué d'huile de soja époxydée.

7. Procédé selon l'une quelconque des revendications 1 à 6, dans lequel l'huile ou les huiles naturelles époxydées représentent de 2 à 10 % en poids et, de préférence, de 4 à 8 % en poids de la composition de sous-couche.

8. Procédé selon l'une quelconque des revendications 1 à 7, dans lequel au moins un composé aliphatique, cycloaliphatique ou aromatique ayant un groupe isocyanate bloqué c) représente de 2 à 10 % en poids et, de préférence, de 4 à 8 % en poids de la composition de sous-couche.

9. Procédé selon la revendication 1, comprenant, sur la base du poids de la composition :
a) de 20 à 40 % en poids, de préférence de 20 à 35 % en poids et plus préférablement de 25 à 35 % en poids d'un copolymère de chlorure de vinyle-acétate de vinyle obtenu par polymérisation d'un mélange de co-monomères constitué, sur la base du poids total des co-monomères, de 95 à 98 % en poids de chlorure de vinyle et de 2 à 5 % en poids d'acétate de vinyle ;
b) de 5 à 7 % en poids d'huile de soja époxydée ; et,
c) de 5 à 7 % en poids dudit au moins un composé aliphatique, cycloaliphatique ou aromatique ayant un groupe isocyanate bloqué.

10. Procédé selon l'une quelconque des revendications 1 à 9, dans lequel ledit substrat sous-couche formé à l'étape i) est stocké pendant au moins 1 heure et de préférence au moins 2 heures avant d'y appliquer la composition de revêtement à contact immédiat.

11. Procédé selon l'une quelconque des revendications 1 à 10, dans lequel l'étape b) comprend l'application d'une série de compositions de couche de finition sur ladite composition de sous-couche et en outre dans lequel aucun durcissement des compositions de sous-couche et de couche de finition appliquées n'est effectué jusqu'à ce que toutes lesdites compositions de revêtement aient été appliquées.

12. Article de fabrication obtenu par le procédé selon l'une quelconque des revendications 1 à 11.
